# EUROPÄISCHE PATENTSCHRIFT

(11) **EP 1 202 894 B1**
(45) Veröffentlichungstag und Bekanntmachung des Hinweises auf die Patenterteilung: **24.11.2004**
(21) Anmeldenummer: 00947998.1
(22) Anmeldetag: 26.07.2000
(51) Int. Cl.: B61L 3/00

(54) **VERFAHREN ZUR ENERGIEOPTMIERUNG DER FAHRWEISE BEI EINEM FAHRZEUG/ZUG UNTER VERWENDUNG EINES GLEITENDEN OPTIMIERUNGSHORIZONTES**
METHOD FOR OPTIMIZING ENERGY IN THE MANNER IN WHICH A VEHICLE OR TRAIN IS DRIVEN USING A SLIDING OPTIMIZATION HORIZON
PROCEDE SERVANT A OPTIMISER LA CONSOMMATION D'ENERGIE POUR UN CERTAIN MODE DE FONCTIONNEMENT D'UN VEHICULE/TRAIN AU MOYEN D'UN HORIZON D'OPTIMISATION MOBILE

(30) Priorität: 29.07.1999 DE 19935352
(43) Veröffentlichungstag der Anmeldung: 08.05.2002
(73) Patentinhaber: Bombardier Transportation GmbH, 13627 Berlin (DE)
(72) Erfinder: FRANKE, Rüdiger, D-69121 Heidelberg (DE); TERWIESCH, Peter, CH-5512 Wohlenschwiel (CH); MEYER, Markus,, CH-6030 Ebikon (CH); KETTELER, Karl-Hermann, CH-5314 Kleindöltingen (CH)
(74) Vertreter: Akers, Noel James
(86) Internationale Anmeldenummer: PCT/EP2000/007148
(87) Internationale Veröffentlichungsnummer: WO 2001/008956

(56) Entgegenhaltungen:
- DD-A- 129 761
- DD-A- 208 324
- DD-A- 236 705
- DD-A- 262 836
- DD-A- 266 539

## Beschreibung

Die Erfindung bezieht sich auf ein Verfahren zur Energieoptimierung der Fahrweise bei einem Fahrzeug/Zug mit in mehrere Abschnitte unterteilter Gesamtstrecke gemäß dem Patentanspruch 1.

Bei der Erstellung von Fahrplänen für den Schienenverkehr werden Zeitreserven für unvorhergesehene Ereignisse und widrige Betriebsbedingungen eingeplant. Da während realer Fahrten die Betriebsbedingungen typischerweise günstiger sind als in der Planung angenommen, werden die dabei entstehenden Zeitreserven für andere Zwecke verfügbar. Eine besonders sinnvolle Benutzung der Zeitreserven besteht in der Einsparung von Energie mittels geeigneter Fahrweise des Fahrzeuges/Zuges.

Aus der DD 208 324 A ist ein Verfahren zur Ermittlung energieoptimaler Fahrregime für Schienenfahrzeuge bekannt. Auf Grundlage algorithmischer und gerätetechnischer Möglichkeiten der Mikrotechnik werden im Rahmen von Simulations- und Optimierungsrechnungen funktionale Zusammenhänge zwischen den optimalen Umschaltpunkten der einzelnen Fahrregimephasen und der Fahrzeit ermittelt. Zur Realisierung einer technisch und ökonomisch effektiven Form der energiesparenden Zugsteuerung werden für jede einer aktuellen Fahrplananlage zuzuordnende Fahrzeitvorgabe optimale Fahrstrategien synthetisiert. Dabei werden funktionale Beziehungen der Abschaltgeschwindigkeit, des Abschaltweges und des Bremseinsatzpunktes in Abhängigkeit der Fahrzeitvorgabe betrachtet und unter Vorgabe von Stützstellen stückweise linearisiert. Die funktionalen Beziehungen für die Schaltpunkte der Abschaltgeschwindigkeit, des Abschaltweges und des Bremseinsatzpunktes werden auf der Basis diskreter Fahrzeiten durch digitale Simulation von Zugfahrten entsprechend den realen Streckenverhältnissen und den realen Zug- bzw. Fahrzeugverhältnissen auf einer stationären EDV im voraus ermittelt. Die auf dem Fahrzeug installierte Bordelektronik hat vor allem die Aufgabe der Speicherung der Stützstellen und der Abarbeitung der erforderlichen Rechengesetze.

Aus der DE 3026652 A, der DD 255 132 A und der EP O 467377 B sind in diesem Zusammenhang Verfahren bekannt, wie man ein Fahrzeug energieoptimal zwischen zwei Haltepunkten bewegt. Bei langen Strecken wird eine Unterteilung in mehrere Abschnitte vorgeschlagen, wobei in jedem Abschnitt eine optimale Teillösung ermittelt wird und die Gesamtlösung sich aus der Zusammensetzung der Teillösungen ergibt. Die vorgeschlagenen Verfahren zur Energieoptimierung betrachten jeweils die Gesamtstrecke zwischen zwei Haltepunkten. Es erfolgt jedoch keine Verwaltung von Zeitreserven.

Die Unsicherheit im Betriebsablauf, wegen der Zeitreserven im Fahrplan vorgesehen werden, ist im Start-Haltepunkt (Startbahnhof) am höchsten und nimmt mit zunehmender Annäherung an den Ziel-Haltepunkt (Zielbahnhof) ständig ab. Die Berücksichtigung der Abnahme der Unsicherheit erfolgt traditionell in Streckenfahrplänen in Form von Durchfahrtzeiten für ausgewählte Streckenpunkte. Dabei wird die Zeitreserve gleichmäßig auf die Gesamtstrecke verteilt.

Die DE 30 26 652 A1 und die EP 0 467 377 B 1 beschäftigen sich mit einer Systemstruktur, in der Verfahren zur Energieminimierung realisiert werden können, wobei eine Gesamtstrecke zwischen zwei Haltepunkten (Haltebahnhöfen) berücksichtigt wird. Dies kann bei langen Strecken dazu führen, daß Echtzeitvorgaben für die Lösung durch das Verfahren in nachteiliger Weise nicht eingehalten werden.

Die bisher bekannten Verfahren zur Energieoptimierung berücksichtigen nur unzureichend die Forderung nach Robustheit des Betriebsablaufs, die mit Zeitreserven im Fahrplan erhöht werden soll. Sie eignen sich nur unzureichend für den Einsatz unter Echtzeitbedingungen.

Der Erfindung liegt die Aufgabe zugrunde, ein verbessertes Verfahren zur Energieoptimierung der Fahrweise bei einem Fahrzeug/Zug mit in mehrere Abschnitte unterteilter Gesamtstrecke anzugeben.

Diese Aufgabe wird in Verbindung mit den Merkmalen des Oberbegriffes durch die im Kennzeichen des einzigen Anspruchs angegebenen Merkmale gelöst.

Die mit der Erfindung erzielbaren Vorteile bestehen insbesondere darin, daß die Optimierungs-Berechnung mittels eines Optimierungsalgorithmus jeweils nur für einen begrenzten Streckenbereich erfolgt. Dadurch wird der nötige Berechnungsaufwand begrenzt, was auch bei langen Gesamtstrecken eine Anwendung der Optimierung unter Echtzeitbedingungen erlaubt. Die Robustheit des Betriebsablaufs wird erhöht. Gleichzeitig ist die realisierte Fahrweise energieoptimal. Mit "Robustheit" ist gemeint, daß auch bei langen Gesamtstrecken und unvorhergesehenen Ereignissen ein rechtzeitiges Eintreffen des Fahrzeuges/Zuges am Ziel-Haltepunkt gewährleistet ist.

Weitere Vorteile des vorgeschlagenen Verfahrens ergeben sich aus der nachstehenden Beschreibung.

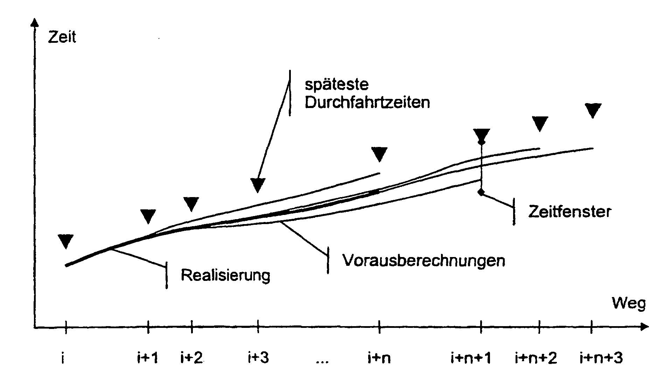

Die Erfindung wird nachstehend anhand des in der einzigen Zeichnung dargestellten Ausführungsbeispieles näher erläutert.

Die Figur zeigt das Weg/Zeit-Diagramm eines Fahrzeuges, wobei die gesamte Fahrstrecke in mehrere einzelne Abschnitte eingeteilt ist und i den Laufindex für die einzelnen Abschnitte darstellt. Mit n ist die zweckmäßige Anzahl der Abschnitte für eine Vorausberechnung bezeichnet. Die jeweils spätesten Durchfahrtzeiten sind mit Dreiecken gekennzeichnet. Ferner ist beispielhaft ein Zeitfenster angegeben. Durch das Zeitfenster wird bestimmt, zu welcher frühesten und spätesten Durchfahrtzeit ein bestimmter Abschnitt vom Fahrzeug zu passieren ist.

Erfindungsgemäß wird bei wiederholter Durchführung der Optimierungs-rechnung während der Fahrt für jeweils aktuelle Bedingungen in jeder Wiederholung nur ein begrenzter Streckenabschnitt und nicht die Gesamtstrecke betrachtet.

Für lange Strecken im Fernverkehr ist es unnütz, eine optimale Fahrweise im voraus bis zum nächsten Ziel-Haltepunkt zu berechnen, denn eine kurzfristige unvorhergesehene Änderung im Betriebsablauf, deren Auftrittswahrscheinlichkeit mit zunehmender Streckenlänge wächst, würde bereits eine Neuberechnung erfordern. Deshalb wird erfindungsgemäß vorgesehen, bei einer Berechnung jeweils nur einen begrenzten Streckenbereich zu betrachten. Vorgaben für die Endzeit, zu der dieser Streckenbereich passiert sein muß, können aus der Einbeziehung der Zeitreserven abgeleitet werden. Die Berechnung wird während der Fahrt zyklisch wiederholt, wobei der betrachtete Streckenbereich zusammen mit dem Fahrzeug bewegt wird.

Die einzige Figur veranschaulicht das prinzipielle Verfahrensschema. Während das Fahrzeug sich im Abschnitt i befindet, wird eine vorher ermittelte optimale Steuerung verwendet, wobei zur Ermittlung dieser optimalen Steuerung der Bereich von i bis i+n betrachtet worden ist, das heißt n entspricht der Anzahl der Abschnitte für eine Vorausberechnung. Während das Fahrzeug sich im Abschnitt i befindet, erfolgt eine Neuberechnung für aktuelle Bedingungen, wobei jetzt der Bereich von i+1 bis i+n+1 betrachtet wird. Erreicht das Fahrzeug den Abschnitt i+1, so wird mit den Ergebnissen dieser Neuberechnung fortgefahren. Dieser Vorgang wird zyklisch wiederholt. Es wird in jeder Vorausberechnung ein Bereich von n Abschnitten betrachtet, wobei jeweils nur die Ergebnisse für den ersten Abschnitt realisiert werden, da anschließend (für den nächsten Abschnitt) eine neue Vorausberechnung vorliegt. Erst wenn zwischen dem Fahrzeug und dem Ziel-Haltepunkt weniger als n Abschnitte liegen, erfolgt die Optimierung über die verbleibende Gesamtstrecke.

Für das vorgeschlagene Verfahren geeignete Optimierungsalgorithmen sind aus Papageorgiou: Optimierung, Kapitel 10, 19 und insbes. 20, Oldenbourg Verlag, 1996 bekannt.

## Patentansprüche

1. Verfahren zur Energieoptimierung bei einem Fahrzeug bei der Benutzung von Zeitreserven, welche bei einem Fahrplan eingeplant sind, wobei die folgenden Schritte vorgesehen sind:
Unterteilung eine zwischen einem Start-Haltepunkt und dem nächsten Ziel-Haltepunkt zu durchfahrende Gesamtstrecke in mehrere Abschnitte;
Zuerkennung jedem Abschnitt eine gewisse Zeitreserve;
während das Fahrzeug sich in einem Abschnitt **i** befindet, Ermittlung einer optimalen Steuerung unter Zuhilfenahme eines Optimierungsalgorithmus, wobei zur Ermittlung dieser optimalen Steuerung nur ein aus einer vorgegebenen Anzahl **n** von Abschnitten bestehender begrenzter Streckenbereich für die Optimierung betrachtet wird;
Steuerung des Fahrzeugs unter Verwendung der Ergebnisse der Optimierung; und
zyklischer Wiederholung der Optimierungs-Berechnung während der Fahrt wobei der betrachtete Streckenbereich entsprechend der Bewegung des Fahrzeuges aktualisiert wird.

2. Verfahren zur Energieoptimierung nach Anspruch 1,wobei
für die Ermittlung einer optimalen Steuerung, während das Fahrzeug sich in einem Abschnitt **i** befindet, der Bereich von **i+1** bis **i+n+1** in einer Neuberechnung betrachtet wird; und wobei
zur Steuerung des Fahrzeuges im Abschnitt **i+1,** die Ergebnisse der Neuberechnung verwendet werden.

3. Verfahren zur Energieoptimierung nach Anspruch 1 oder Anspruch 2, wobei erst wenn zwischen dem Fahrzeug und dem Ziel-Haltepunkt weniger als n Abschnitte liegen, die Optimierung über die verbleibende Gesamtstrecke erfolgt.

## Claims

1. Method for optimizing the energy consumption of a vehicle using time reserves, provided for in a schedule, whereby the following steps are provided:
dividing a total route to be covered between a departure station and the next destination station into several sections;
allocating a certain time reserve to each section;
while the vehicle is in a section i, determining the optimum control by using an optimization algorithm, whereby in order to determine this optimum control only a limited route consisting of a pre-defined number **n** of sections is taken into account for optimizing the energy consumption;
controlling the vehicle using the results of optimization; and
cyclically repeating the optimization computation during the journey, whereby the limited route observed is up-dated according to the movement of the vehicle.

2. Method for optimizing the energy consumption according to Claim 1, whereby in order to determine the optimum control, while the vehicle is in a section **i,** the limited route from **i+1** to **i+n+1** is taken into account in a new computation; and whereby in order to control the vehicle in the section **i+1,** the results of the new computation are used.

3. Method for optimizing the energy consumption according to Claim 1 or Claim 2, whereby optimization is only effected over the remaining total route if less than **n** sections remain between the vehicle and the destination station.

## Revendications

1. Méthode d'optimisation de l'énergie d'un véhicule en utilisant des réserves de temps, planifiées selon un horaire, dans laquelle sont prévues les étapes suivantes:
subdivision en plusieurs sections d'un trajet total qui doit être parcouru entre un point de départ et le point d'arrivée suivant ;
allocation d'une certaine réserve de temps à chaque section ;
lorsque le véhicule se trouve dans une section **i**, calcul d'un contrôle optimum à l'aide d'un algorithme d'optimisation, dans lequel pour effectuer le calcul de ce contrôle optimum, l'on ne prend en compte pour l'optimisation qu'un parcours limité d'un nombre n prédéterminé de sections ;
contrôle du véhicule en utilisant les résultats de l'optimisation; et
répétition cyclique du calcul d'optimisation au cours du trajet, dans lequel la zone de parcours considérée est actualisée en fonction du mouvement du véhicule.

2. Méthode d'optimisation de l'énergie selon la revendication 1, dans laquelle, pour effectuer le calcul d'un contrôle optimum lorsque le véhicule se trouve dans une section **i,** la zone de **i+1** à **i+n+1** est prise en compte dans un nouveau calcul et en ce que pour le contrôle du véhicule dans la section **i+1,** on utilise les résultats du nouveau calcul.

3. Méthode d'optimisation de l'énergie selon la revendication 1 ou la revendication 2, dans laquelle l'optimisation a lieu sur le trajet total restant uniquement lorsque il y a moins de **n** sections entre le véhicule et le point d'arrivée.
